# EUROPEAN PATENT SPECIFICATION

(11) **EP 2 759 569 B1**
(45) Date of publication and mention of the grant of the patent: **16.10.2019**
(21) Application number: 13152557.8
(22) Date of filing: 24.01.2013
(51) Int. Cl.: C08K 5/00, C08K 5/12, C08K 7/02, C08K 7/14, C08L 67/02, C08L 67/04, C08L 67/08

(54) **A polyactic acid-based composition, a process for processing a polylactic acid based composition into a moulded article**
Milchsäurebasierte Zusammensetzung, Verfahren zur Verarbeitung der milchsäurebasierten Zusammensetzung in einen Formartikel
Composition à base d'acide polylactique, procédé de traitement d'une composition à base d'acide polylactique dans un article moulé

(43) Date of publication of application: 30.07.2014
(73) Proprietor: SO.F.TER. TECNOPOLIMERI SRL, 47122 Forli FC (IT); Röchling Automotive SE & Co. KG, 68165 Mannheim (DE)
(72) Inventor: Mosca, Devid, 39100 Bolzano (IT); Chini, Fabrizio, 38060 Isera (IT); Bortolon, Vittorio, 35123 Padova (IT); Petrone, Antonio, 33038 Spinea (IT)
(74) Representative: Ellwanger, Arndt

(56) References cited:
- WO-A1-2008/049099
- WO-A1-2008/098889
- DE-A1-102008 018 964
- US-A1- 2005 137 332
- US-A1- 2012 029 112
- US-A1- 2012 202 928

## Description

The present invention relates to a polylactic acid-based composition, a process for preparing the same, and a method for processing a polylactic acid-based composition into a moulded article as well as the use of the polylactic acid-based composition.

The emerging concern for environmental protection leads to an increasing demand for polymers derived from renewable resources and articles moulded therefrom. Thus, in the recent years significant effort has been devoted to the study of aliphatic and aliphatic-aromatic polyester resins derived from renewable resources. Consequently, even copolyesters on renewable basis became interesting for industrial applications.

From environmental concerns, an improvement of recycling rates of polymeric components and a use of materials with low environmental load is desired. Due to these circumstances, in particular aliphatic polyesters such as polylactic acid have drawn attention as an interesting material.

In this regard, WO 2010/034689 A1 discloses a biodegradable polymer mixture comprising at least one polyester based on aliphatic or aliphatic-aromatic dicarboxylic acids and aliphatic dihydroxy compound, a polyalkylene carbonate, in particular polypropylene carbonate, at least one biodegradable homo- or copolyester selected from the group consisting of polylactic acid, polycaprolactone, polyhydroxyalkanoates and an inorganic or organic filler, a styrene, acrylic acid ester and/or methacrylic acid ester based copolymer containing an epoxide group and optionally several additives.

Further, WO 2011/145899 A2 discloses a blend of polylactic acid resin and copolyester resin having improved shock resistance and heat resistance, and a moulded product using same. Therein, the blend comprises a polylactic acid resin and a copolyester resin which is copolymerised with an acid component containing terephthalic acid and a diol component.

Polylactic acid-based compositions, having a sufficiently high melting point of 140 to 180 °C, are expected to find wide application in moulded articles that can take advantage of materials based on renewable resources. Moreover, polylactic acid-based compositions can degrade after disposal without polluting the environment and degradation times are strongly dependent on formulation choice.

Therefore, US 2012/0104655 A1 describes a method of making a polylactic acid-based article, wherein the polylactic acid polymer composition includes a polylactic acid polymer, a copolyester polymer, and a crystal nucleating agent. The article is made by providing a sheet having a predetermined crystallinity and including the polylactic acid polymer composition, heating the sheet to maintain a surface of the sheet at a certain temperature; and thermoforming the sheet in a mould. In order to obtain a final crystallinity of 35 to 45 %, the polylactic acid-based article is to be subjected to a long-term temperature treatment.

Striking aspects of conventional polylactic acid-derived compositions are represented by its high stiffness and its concrete susceptibility to heat. In some cases of polylactic acid formulations, this heat and impact drawbacks become strongly limiting for a final application. Thus, application of this material has been limited to peculiar applications like packaging or low duty articles.

It is known from the prior art that, in order to impart sufficient heat resistance to moulded articles based on polylactic acid, their degree of crystallinity has to be increased. Normally, polylactic acid-based products are crystallised by a general method in which a kneaded composition is melted and then moulded at a mould temperature of their glass transition temperature (appr. 60 °C) or below. The moulds need to be cooled over a sufficiently long period of time during the moulding process, or following the moulding operation, the moulded articles must be annealed to make them highly crystallised.

However, when the moulded article is maintained to a temperature around the glass transition temperature, the elastic modulus may be reduced and, consequently, the moulded article is subject to deformation. Furthermore, another dimensional change may occur along with the crystallisation.

In practise, long time cooling processes often are impractical, result in insufficient crystallisation, and are thus disadvantageous in terms of productivity. Even post-crystallisation processes by annealing cannot always solve the above-mentioned drawbacks. Hence, the heat resistance of polylactic acid-based moulded articles is not sufficient for a variety of applications, for instance for most of automobile parts exposed to high temperatures or other products requiring improved heat resistance.

It is therefore an object of the present invention to provide a polylactic acid-based composition which overcomes the above-mentioned drawbacks. In particular, a polylactic acid-based composition is aimed which exhibits improved mouldability and from which moulded articles can be obtained having sufficient heat resistance and impact strength to be used as an automobile part.

Further objects of the present invention are to provide a process for preparing the polylactic acid-based composition as well as a method for processing the polylactic acid-based composition into a moulded article. Another aspect of the present invention is represented by the uses of the polylactic acid-based composition.

The first object is obtained by a polylactic acid-based composition comprising
i) 70 to 95 wt.-% of a polylactic acid compound,
ii) 4 to 25 wt.-% of an aromatic-based copolyester having soft segments being long-chain ester units, and
iii) 0.1 to 5.0 wt.-% of a polybutylene terephthalate cyclic oligomer.

The second object is obtained by a process for preparing this polylactic acid-based composition, comprising the process steps:
A) providing a mixture of
   i) 70 to 95 wt.-% of a polylactic acid compound,
   ii) 4 to 25 wt.-% of an aromatic-based copolyester having soft segments being long-chain ester units, and
   iii) 0.1 to 5.0 wt.-% of a polybutylene terephthalate cyclic oligomer, and
B) melt kneading the mixture at a temperature profile comprising the temperature steps of 200 °C, 210 °C, 230 °C, 230 °C, 210 °C, 200 °C, wherein each temperature step is maintained for 15 to 60 seconds;

The third object is obtained by a method for processing a polylactic acid-based composition into a moulded article, comprising the method steps of:
a) providing the above polylactic acid-based composition in a molten state,
b) introducing the molten polylactic acid-based composition into a pre-heated moulding tool at a temperature of 90 to 120 °C,
c) moulding the polylactic acid-based composition at an elevated temperature of 180 to 210 °C into a moulded article,
d) cooling the moulded article within the moulding tool at a reduced temperature of 60 to 90 °C, and
e) demoulding the moulded article; a moulded article obtainable by the above method applying the polylactic acid-based composition according; and several uses of the above polylactic acid-based composition.

The polylactic acid-based composition exhibits improved moldability. Articles moulded therefrom have superior heat resistance as well as impact strength, enabling their use as automobile parts.

Hereinafter, the present invention will be described in more detail.

In a first aspect, the present invention provides a polylactic acid-based composition which comprises:
i) 70 to 95 wt.-% of a polylactic acid compound,
ii) 4 to 25 wt.-% of an aromatic-based copolyester having soft segments being long-chain ester units, and
iii) 0.1 to 5.0 wt.-% of a polybutylene terephthalate cyclic oligomer.

The term "compound" used herein defines a polymeric substance of distinct origin. The compound does not need to be a "pure" substance in meaning of chemistry. Accordingly, the term "composition" describes a mixture of two or more particular compounds.

The polylactic acid compound (abbreviated by PLA) used in the present invention is a biodegradable and biocompatible polyester derived from 100 % renewable resources, in particular from corn.

Initially, for preparing lactic acid starch is isolated from corn endosperm and hydrolysed by a liquid enzyme into glucose. The glucose ferments to lactic acid in a neutral environment. By distillation purification, dewatered lactic acid can be purified to polymer level.

The polylactic acid compound is obtainable by means polycondensation of lactic acid compounds alone as raw material monomers. Therein, the lactic acid compound exists as a racemic mixture in the form of their optical isomers L-lactic acid (L-form) and D-lactic acid (D-form). In the present invention, the lactic acid compound may contain both the optical isomers. It is preferred using a lactic acid having a high purity, in particular more than 90 % of optical purity.

Poly(-D-)lactic acid (abbreviated by PDLA) or poly(-L-)lactic acid (abbreviated by PLLA) constituting the polylactic acid compound is also produced by direct melt polymerisation, or by melt ring-opening polymerisation of lactide cyclic oligomers.

The melt ring-opening polymerisation of lactide is the best choice in view of production costs. To produce poly(-D-)lactic acid or poly(-L-)lactic acid by melt ring-opening polymerization, L-lactide or D-lactide for obtaining the L-form or D-form of lactic acid are used in the presence of an alcohol-based initiator and a metal catalyst.

Particularly, due to the fact that the polylactic acid compound used in the present invention is a thermoplastic recyclable material environmentally friendly produced from renewable resources, these compounds are seen as promising materials for car components and others articles.

The aromatic-based copolyester used in the present invention having soft segments is generally represented by a thermoplastic polyester elastomer (abbreviated by TPC), which is a segmented copolyester containing hard polyester segments and soft segments of a flexible polymer or oligomer that is substantially amorphous. Particularly, the aromatic-based copolyester has a glass-transition temperature (Tg) of below 0 °C.

In case the soft segments are polyethers or renewable based OH terminated diols, the copolyester is also referred to as copolyether ester (abbreviated by TPC-ET). In case the soft segments are polyesters, the copolyester is also referred to as copolyester ester (abbreviated by TPC-ES). In case the soft segments contain ester and ether linkages, the copolyester is also referred to as copolyester ether (abbreviated by TPC-EE). Such segmented copolyesters are understood to having a multiplicity of repeating long-chain ester units, also called "soft segments", and short-chain ester units, also called "hard segments". Soft segments and hard segments are connected to each other in head-to-tail fashion through linkages of the ester type.

Hard segments (i.e. hort-chain ester units) are represented by the general formula (I): 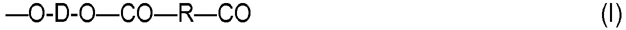 and soft segments (long-chain ester units) have the general formulae (IIa) and/or (IIb): 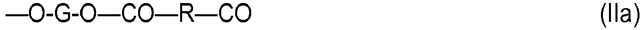 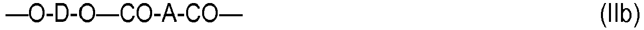 wherein:
- D: is a divalent radical remaining after the removal of the hydroxyl groups from an alkylene glycol having a molecular weight lower than about 250;
- R: is a divalent radical remaining after the removal of the carboxyl groups from a dicarboxylic acid having a molecular weight lower than about 300;
- G: is a divalent radical remaining after the removal of the hydroxyl end groups from a long chain glycol having a molecular weight of from about 250 to about 6,000
- A: is a divalent radical remaining after the removal of the carboxyl groups from an unsaturated or saturated long chain dicarboxylic acid and
- O: is oxygen.

The expression "short-chain ester units", in connection with units present in a polymeric chain, relates to the reaction product of a diol having a low molecular weight (lower than about 250) and a dicarboxylic acid under formation of ester units represented by formula (I) above.

Among the diols having a low molecular weight which may be reacted in order to form short-chain ester segments are non-cyclic, alicyclic and aromatic di-hydroxy compounds. Diols of from 2 to 15 carbon atoms, such as ethylene-glycol, propyleneglycol, isobutylene-glycol, tetramethylene-glycol, pentamethylene-glycol, 2,2-dimethyltrimethylene-glycol, hexamethylene-glycol, decamethylene glycol, di-hydroxycyclohexane, cyclohexane-dimethanol, resorcinol, hydroquinone, 1,5-di-hydroxynaphthalene, etc., are preferred. Particularly preferred are aliphatic diols containing from 2 to 8 carbon atoms. Aromatic di-hydroxy compounds which can also be used are bisphenols, such as bis-(p-hydroxy)-diphenyl, bis-(p-hydroxyphenyl)-methane and bis-(p-hydroxyphenyl)-propane. Equivalent ester-forming derivatives of diols can be used as well, for example, ethylene oxide or ethylene carbonate can be used instead of ethylene glycol. These preferred diols are selected on the basis of physical and thermal properties of the derived copolyesters.

The expression "low-molecular-weight diols" used in the present context should thus be understood as including all of the derivatives suitable for forming esters. However, the condition with respect to molecular weight only applies to the diol, but not to the derivatives thereof.

1,4-butanediol and/or renewable derived 1,3-propanediol must be at least a part of the diols used.

Dicarboxylic acids which may be reacted with the low molecular weight diols and the long-chain glycols in order to produce the copolyesters according to the present invention are aliphatic, cycloaliphatic or aromatic dicarboxylic acids having a low molecular weight, i.e., having a molecular weight of less than about 300.

The term "dicarboxylic acids" as used herein also encompasses equivalent derivatives of dicarboxylic acids which show behaviour substantially similar to the dicarboxylic acids in the reaction with glycols and diols for the formation of the copolyester polymers. These equivalent compounds include esters and ester-forming derivatives, such as, e.g., halides and anhydrides. However, the condition with respect to molecular weight always relates to the acid, and not to its ester equivalent or to its derivative suitable for forming esters. Accordingly, the term "dicarboxylic acid" also comprises an ester of a dicarboxylic acid having a molecular weight higher than about 300, or an equivalent of a dicarboxylic acid having a molecular weight higher than about 300, provided that the corresponding acid still has a molecular weight of less than about 300.

The dicarboxylic acids may contain any substituent or any combination of substituents which do not interfere to a significant extent with the formation of the copolyester polymer and the use of the polymer in the end products according to the present invention. Within the context of the present invention, by "aliphatic dicarboxylic acids" those carboxylic acids are meant which contain two carboxylic groups, each of said carboxyl groups being bonded to a saturated carbon atom. If the carbon atom to which the carboxyl group is bonded is a saturated one and is inside a ring, the acid is a cycloaliphatic one. The term "aromatic dicarboxylic acids", used in the instant context, indicates those dicarboxylic acids which contain two carboxyl groups. It is not necessary that both functional carboxyl groups be attached to the same aromatic ring and where more than one ring is present they can be joined by aliphatic or aromatic divalent radicals or divalent radicals such as -C-O- or -SO₂- with each carboxyl group being bonded to a carbon atom of an either isolated or condensed aromatic ring.

Examples of aromatic dicarboxylic acids which can be used comprise phthalic acid, isophthalic acid and terephthalic acid, dibenzoic acid; dicarboxylic compounds containing two benzene rings, such as, e.g., 4,4'-diphenyl dicarboxylic acid, bis-(para-carboxyphenyl)-methane, paraoxy-(para-carboxy-phenyl)-benzoic acid, ethylene-bis-(para-oxybenzoic acid), 1,5-naphthalene-dicarboxylic acid, 2,6-naphthalene-dicarboxylic acid, 2,7-naphthalene-dicarboxylic acid, phenanthrene-dicarboxylic acid, anthracene-dicarboxylic acid, 4,4-sulfonyl-dibenzoic acid and their (C₁-C₁₂)-alkyl derivatives and ring-substituted derivatives, such as, e.g., halogenated (e.g. F, Cl, Br) derivatives, (preferably C₁₋₄-) alkoxy derivatives and aryl derivatives.

Aromatic acids containing a hydroxy group, such as, e.g., para-(beta-hydroxy-ethoxy)benzoic acid, can be used as well, provided that an (aromatic) dicarboxylic acid is also present.

Aromatic dicarboxylic acids constitute a preferred class of acids for the preparation of the copolyesters according to the present invention, because these compounds provide for improved thermal properties and enhanced hydrolysis resistance of the derived copolyesters.

Among the aromatic acids, those which contain from 8 to 16 carbon atoms are preferred; particularly preferred are phenylene-dicarboxylic acids, i.e., phthalic acid, isophthalic acid and terephthalic acid. In particular, either terephthalic acid alone or a mixture of terephthalic acid and isophthalic acid are preferred. Besides an improvement of thermal properties and an enhancement of hydrolysis resistance of the derived copolyesters, these compounds are selected because of their industrial avaliability and therefore their cost advantages.

Terephthalic acid must be at least part of the acids used due to a better cristallinity and improved thermal behaviour.

The term "long chain ester units" also applies to units having formula (IIb) which are reaction products of a long chain dicarboxylic acid with a low molecular weight diol.

Long-chain glycols suitable for preparing the polymers according to the present invention include poly-(alkylene oxide)-glycols (wherein "alkylene" preferably is a C₂-C₁₀-alkylene) such as poly(ethylene oxide) glycol, poly-(1,2- and 1,3-propylene oxide)-glycol, poly-(tetramethylene oxide)-glycol, poly-(pentamethylene oxide)-glycol, poly(hexamethylene oxide)-glycol, poly-(heptamethylene oxide)-glycol, poly-(octamethylene oxide)glycol, poly-(nonamethylene oxide)-glycol, poly-(decamethylene oxide)-glycol and poly-(1,2-butylene oxide)-glycol; random copolymers or block copolymers of ethylene oxide and 1,2-propylene oxide; polyformals prepared by reacting formaldehyde with glycols, such as pentamethylene-glycol, or glycol mixtures, such as mixtures of tetramethylene-glycol and pentamethylene-glycol; the dicarboxymethyl-acids of polyalkylene oxides, such as those derived from poly(tetramethylene oxide) or their esters. Furthermore, both polyisoprene-glycol and poly-butadiene-glycol, their copolymers and saturated products obtained by hydrogenation thereof may be used as long-chain polymeric glycols. Additionally, the glycol-esters of dicarboxylic acids formed by means of the oxidation of polyisobutylene-diene copolymers can be used as raw materials. Preferred long-chain glycols are poly(tetramethylene oxide) glycol having a number average molecular weight of 600 to 4,000 and poly(ethylene oxide) glycol and/or poly-(1,2-and-1,3-propylene oxide)-glycol having a number average molecular weight of 1,000 to 3,000.

The hard segments having the formula (I) constitute about 10 to 95 weight percent of the copolyester, preferably from about 10 to 55 weight percent and more preferably about 13 to 40 weight percent, since this results in polymers having a desirable balance of elastomeric properties and toughness. The remainder of the copolyester consists of soft segments, represented by either formula (IIa) or formula (lib), comprising about 5 to 90 weight percent and preferably 45 to 90 weight percent and more preferably 60 to 87 weight percent of the copolyester.

The ratio of soft segments to hard segments in the above described copolyester may vary within wide limits, but is preferably chosen such that a copolyether ester of relatively low hardness is obtained. Preferably, the hardness of the copolyether ester is below 70 Shore D, more preferably below 60 Shore D.

The use of selected soft segments in the aromatic-based copolyester allows for imparting the above-mentioned properties to the polylactic acid-based composition. In the composition of the present invention, the aromatic-based copolyester serves as a toughening agent, a nucleating agent and a hydrolysis stabiliser. Moreover, the polylactic acid-based composition according to the present invention exhibits advanced performance in terms of hydrolysis resistance compared to state of the art pure lactic acid-based polymers because of the hydrophobicity of the aromatic-based copolyester.

The polybutylene terephthalate cyclic oligomer it a "pure" compound obtained by selected depolymerisation of polybutylene terephthalate. The cyclic oligomer serves as a toughening agent, a nucleating agent and a processing aid.

In general, cyclic polyester oligomers have unique physical properties that facilitate the manufacture of polyester products. The low melt viscosity allows the cyclic oligomer resin to easily fill moulds, why it acts as a plasticizer and a processing aid. Further, the incoming polymerisable polybutylene terephthalate form acts as a nucleating agent for the polylactic acid compound, thus improving the mouldability of the overall composition and thermal properties of the final moulded article.

The cyclic oligomers demonstrate certain processing advantages for thermosetting components having very low melt viscosity. However, they can be polymerised to form thermoplastic polyesters which provide superior toughness, excellent chemical resistance, high heat resistance and improved scratch resistance. Thus, the cyclic oligomer is considered being an impact modifier.

At the end, the final polylactic acid-based composition according to the present invention is at least 75 % based on renewable raw materials.

Preferably, the polylactic acid-based composition of the present invention further comprises iv) glass or natural derived fibre reinforcing materials in order to additionally enhance the mechanical stability of the material, in particular in view of manufacturing automobile parts therefrom.

In a preferred embodiment, the aromatic-based copolyester is derived from a mixture of dimerised fatty acids and is 30 % based on renewable resources. The chemical nature of these oleochemically derived dicarboxylic acids representing particularly selected soft segments enables a modification of the polymer composition based on polylactic acid in terms of elasticity, flexibility, high impact strength, hydrolytic stability, hydrophobicity, and lower glass transition temperatures. The overall percentage of renewable raw materials basis can be further increased by deriving the aromatic-based copolyester also from renewable resources.

Long chain dicarboxylic acids are represented by renewable base dimerised fatty acids. The term dimer fatty acid is well known in the art and refers to the dimerisation product of mono- or polyunsaturated fatty acids. Preferred dimer acids are dimers of C₁₀ to C₃₀, more preferably C₁₂ to C₂₄, particularly C₁₄ to C₂₂, and especially C₁₈ alkyl chains. Suitable dimer fatty acids include the dimerisation products of oleic acid, linoleic acid, linolenic acid, palmitoleic acid, elaidic acid, or erucic acid. The dimerisation products of the unsaturated fatty acid mixtures obtained in the hydrolysis of natural fats and oils, e.g. sunflower oil, soybean oil, olive oil, rapeseed oil, cottonseed oil, and tall oil may also be used.

Among these dimer acid products, the hydrogenated dimer acid products are preferred, and the purified and hydrogenated dimer fatty acids are particular preferred. Long chain glycol comprises also dimerised fatty diol, deriving from hydrogenation of high purity dimer fatty acid, or a mixture of poly(alkylene oxide) glycol and dimer fatty diol. Among dimer diol products the ones deriving from hydrogenation of high purity dimer fatty acid are preferred. These products are particularly capable of enhancing chemical properties like hydrolytic stability, chemical resistance and water repellency.

More concretely, in the polylactic acid-based composition of the present invention
- the amount of the polylactic acid compound is 79 to 90 wt.-% ,
- the aromatic-based copolyester is selected from copolyether ester (TPC-ET), copolyester ester (TPC-ES), copolyester ether (TPC-EE), in an amount from 7 to 18 wt.-%, and
- the amount of the polybutylene terephthalate cyclic oligomer composition is 2 to 3 wt.-%.

This particular composition allows for obtaining a homogeneous and not delaminating compound easily obtained by melt mixing the components.

In a second aspect, a process for preparing a polylactic acid-based composition is provided, which comprises the process steps:
A) providing a mixture of
   i) 70 to 95 wt.-% of a polylactic acid compound,
   ii) 4 to 25 wt.-% of an aromatic-based copolyester having soft segments being long-chain ester units, and
   iii) 0.1 to 5.0 wt.-% of a polybutylene terephthalate cyclic oligomer, and
B) melt kneading the mixture at a temperature profile comprising the temperature steps of 200 °C, 210 °C, 230 °C, 230 °C, 210 °C, 200 °C, wherein each temperature step is maintained for 15 to 60 seconds.

The mixture in process step A) may be provided in the manner described above.

The temperature profile specified in process step b) is specially adapted for a co-rotating twin screw extruder. In a particular case, the extruder comprises six different zones that are maintained at the temperature profile indicated above. Therein, the temperature profile is dependent on specific polymer melting and mixing requirements taking in to account that it is necessary to avoid any thermal degradation phenomena.

However, instead of the above-mentioned co-rotating twin screw extruder other kneading devices may be used as well having a very similar temperature profile.

Preferably, the mixture further comprises iv) glass or natural derived fibre reinforcing materials. This serves to additionally enhance the mechanical stability of the material, in particular in view of manufacturing automobile parts therefrom.

In a further embodiment, the process further comprises the process step of C) pelletising the melt kneaded mixture. In case the polylactic acid-based composition is present in pellet form, the processing will be more convenient, in particular since pellets allow for a more homogenous melting of the material when a screw extruding device is applied.

The third aspect of the present invention provides a method for processing a polylactic acid-based composition into a moulded article. This method comprises the method steps of:
a) providing a polylactic acid-based composition as defined above in a molten state,
b) introducing the molten polylactic acid-based composition into a pre-heated moulding tool at a temperature of 90 to 120 °C,
c) moulding the polylactic acid-based composition at an elevated temperature of 180 to 210 °C into a moulded article, preferably in a time interval of 0.2 to 5.0 s,
d) cooling the moulded article within the moulding tool at a reduced temperature of 60 to 90 °C, preferably in a time interval of less than 45 s, and
e) demoulding the moulded article.

In practise, the provision of the polylactic acid-based composition may be done by melt distributing the polyester compound within the polylactic acid compound by means of high shear melt mixing, for instance in a twin screw co-rotating extruder.

The crystallite nucleation process can be improved by moulding the polylactic acid-based composition at the given temperature, wherein the tool temperature is carefully controlled, and cooling the moulded article at a remarkably reduced temperature compared to the moulding step.

The moulding step can be carried out by injection moulding, blow moulding or extrusion moulding, which depends on the type of the final moulded article.

In order to further improve the crystallite nucleation process, it is preferred to admix carbon dioxide to the molten polylactic acid-based composition, in particular carbon dioxide in its supercritical state.

In a fourth aspect of the present invention, a moulded article is provided, which is obtainable by the method defined above applying the polylactic acid-based composition according to the present invention. Due to the starting materials and the processing steps it favourably exhibits superior toughness, high impact strength, excellent chemical resistance, very good hydrolytic stability, high heat resistance and improved scratch resistance.

The moulded article may be one of various industrial parts, in particular automobile parts exemplified by windshield cowls, microfilter housings, air ducting systems, door and side wall trims, trunk and tailgate trims, back panels, trays and sumps, wheel arch liners, engine and body undershields, design covers, air inlets with controllable flaps, intake manifolds, engine air intakes and filtrations, or charge-air tubes.

The polylactic acid-based composition according to the present invention may be used for manufacturing components in the under-bonnet area of vehicles, in particular intake ducts, engine design covers, air filter boxes, intake resonators, snorkels, battery trays, air guides, air shields.

This polylactic acid-based composition can alternatively be use for manufacturing components having a shock resistance greater than 20 kJ/m², preferably greater than 80 kJ/m², in particular intake ducts, rocker covers, bumpers, cowl-grilles, covers, deflectors, shields, wheel arch liners, interior trims. The shock resistance is determined as per standard test according to ISO 179/1eU Charpy unnotched 23°C.

Moreover, the polylactic acid-based composition according to the present invention may be used for manufacturing components having scratch resistance and UV resistance, in particular interior and exterior trims such as door panels component, dashboard, cowl-grilles, rocker cover, and external mirrors.

The scratch resistance is determined with Erichsen equipment Model 430, needle Ø 1 mm Model Erichsen 318, colour measurement equipment as per standard DIN 5033-4, Geometry as per standard DIN 5033-7, Chapter 3.2.1 45°/0°- grid 40 x 40 mm with 2 mm line distance, force 10 N, velocity 1000 mm/min, visual check under light DIN 6173 Part 1 and 2, standard light D65. The test result is ΔL ≤ 1.5.

The UV resistance is determined with equipment Xenotest 1200 as per Standard DIN 75202, 5 periods, Dose 10 Mj. Therein, the results must be GM ≥ 4 as per standard DIN EN 20105-A02.

As an alternative, the polylactic acid-based composition can be used for manufacturing components having high dimensional stability at heat deflection temperatures (abbreviated by HDT) of more than 140 °C at 1.82 MPa, in particular intake system ducts, air filter boxes, intake resonators, snorkels, battery trays, engine design covers, active grille shutters. The dimensional stability is determined as per standard ISO 75-1/-2, value > 140 °C.

Another preferred use of the polylactic acid-based composition according to the present invention is the manufacturing of components having a hot air resistance at 150 °C for more than 500 hours, in particular air filter boxes, charged air intake ducts, engine covers, air intake manifolds, undershields cover in exhaust pipe area, exhaust mufflers. The hot air resistance is determined as per standard ISO 527-1/-1, value of tensile stress break > 50 % than value before ageing.

Still another use may be the manufacturing of components having hydrolysis resistance at 90 °C in 90 to 100 % relative humidity environments for at least 500 hours, in particular underbody shields, deflectors, wheel arch liners and general underbody components. Therein, the components according to the present invention in their hydrolysis resistance are very close to petrochemical-based polymers like polypropylene (PP), polyamide (PA), polybutylene terephthalate (PBT), and the like. The hydrolysis resistance is determined as per standard ISO 527-1/-1, value of tensile stress break > 50 % than value before ageing.

Further features, advantages and application of the present invention are given in the following description of preferred embodiments. Therein, all features described and/or depicted constitute the object of the present invention on their own or in any possible combination, regardless of their summary in the appended claims or their back-references.

In the industrial practice, polymeric products are rarely "pure" materials. Most often they are homogenous mixtures, compatibilised blends or compositions. Various kinds of additives are routinely added to a base polymer in order to modify or improve selected properties. These additives or modifiers must be incorporated into the base polymer prior to the final shaping operation.

Polymer blends and polymeric alloys, produced by mixing together two or more polymers to generate a material with a wider range of properties, are finding increasing use in every kind of applicative ranges.

### Examples

### Example 1 Preparation of renewable based copolyester - PIBIFLEX SHD56

Pibiflex SHD56 is a copolyester based on dimethyl terephthalate (abbreviated by DMT), 1,4-butanediol and renewable based soft segment.

3.66 moles of DMT, 0.57 moles of purified dimeric fatty acid diol (MW = 570), and 3.20 moles of 1,4-butanediol are subjected to melt polycondensation. Alternatively, the condensation polymerisation may be carried out in melt or in the solid phase or in a combination of reaction steps in any of those phases.

Copolyester polymers are produced by reaction of a lower alkyl ester compound of a dicarboxylic acid (DMT) with a mixture of soft and hard segments mostly of them coming from renewable resources. At first, the corresponding copolyester prepolymer is typically formed in an ester interchange reaction at temperatures from about 150 °C to about 300 °C, which is then polycondensed at increasing temperature and reduced pressure, whereby the excess dihydroxy compound is split off.

The final stages of the reaction are generally conducted under high vacuum (< 10 mm of Hg, i.e. < 0.013 bar) in order to produce a high molecular weight polyester polymer. Both reaction steps may make use of transesterification and/or polycondensation catalysts. Typical catalysts include compounds of Ti, Zr, Sn, Sb for the transesterification, and compounds of Sb, Ti, Pb, Ge, Zn or Sn for the polycondensation, whereby the compounds are in general oxides, alcoholates, acetates, or carboxylates. The amount of metal in the catalyst ranges mostly between 20 and 500 ppm, based on 100 parts by weight (abbreviated by pbw) of the polyester polymer.

At the end, a 56 shore D polymer having a melt flow index (abbreviated by MFI) at 230 °C and 2.16 kg in the range 9 to 17 g/10 min is obtained after melt pelletizing.

### Example 2 Preparation of polylactic acid-based compositions

The following compositions are prepared:
Composition A
   38 pbw PLLA, 10 pbw PDLA, 20 pbw PIBIFLEX SHD56, 3 pbw polybutylene terephthalate cyclic oligomer, 2 pbw Lotader Ax900, 30 pbw glass fibre
Composition B
   38 pbw PLLA, 9.5 pbw PDLA, 18 pbw PIBIFLEX SHD56, 2 pbw Lotader Ax900, 2.5 pbw Stabaxol KE 9464, 30 pbw glass fibre
Composition C
   75.4 pbw PLLA, 5.67 pbw PDLA, 10 pbw PIBIFLEX SHD56, 3 pbw polybutylene terephthalate cyclic oligomer, 2 pbw Lotader Ax900, 5 pbw Talc 3CA (ultrafine talc nucleating / reinforcing agent from Luzenac).
Composition D
   66.1 pbw PLLA, 4,97 pbw PDLA, 10 pbw PIBIFLEX SHD56, 2 pbw Lotader Ax900, 15 pbw grinded natural sisal fibre.

In the above compositions, Lotader AX900 (trade name by Arkema company is a terpolymer of ethylene, methyl acrylate and glycidyl methacrylate acting as the compatibiliser between PLA and PIBIFLEX SHD56, and Stabaxol KE 9464 (trade name by Rhein Chemie company) is a polycarbodiimide-masterbatch acting as the coupling agent used to improve melt viscosity.

The components of each of the above compositions are melt kneaded at 220 rpm in to a co-rotating high shear twin screw extruder -W.F. 40- (Werner & Pfleiderer 40) having a temperature profile of 200 °C, 210 °C, 230 °C, 230 °C, 210 °C, 200 °C, wherein each temperature step is maintained for 15 to 60 seconds.

The resulting finely homogeneous mixed compatibilised polymer mixture is cooled in a water bath and is subsequently strand pelletized.

The compound composition of the present invention preferably comprises a stabiliser set. A stabilizer which is used as a stabiliser for thermoplastic resins may be generally used. The stabiliser is, for example, an antioxidant or an light stabilizer. Examples of the antioxidant include hindered phenol-based compounds, hindered amine-based compounds, phosphite-based compounds and thioether-based compounds. The total amount of these additives is in the range 0.3 to 0.5 pbw.

The derived polylactic acid-based composition is moulded at a melt temperature of 150 to 200 °C and a mould temperature of 50 to 60 °C.

The physical and/or mechanical data (after annealing) obtained by standard measuring methods are given in the following table:

| Composition | Unit | A | B | C | D |
|---|---|---|---|---|---|
| MFI (230 °C, 2.16 kg) | g/10 min | 3.9 | 7.3 | 23.7 | |
| MFI (200 °C, 2.16 kg) | g/10 min | | | | 0.2 |
| Ash content | % | 30.0 | 27.7 | 5.1 | |
| Density | g/cc | 1.454 | 1.455 | 1.269 | 1.254 |
| ASTM Izod 23 °C notched | J/m | 50 | | | |
| ASTM Izod -30 °C ci notched | J/m | 47 | | | |
| ASTM Izod 23 °C unnotched | J/m | 312 | | | |
| ASTM Izod -30 °C unnotched | J/m | 361 | | | |
| Izod ISO 180/1A 23 °C | kJ/m² | | 5.5 | 7.9 | 5.8 |
| Izod ISO 180/1A -30 °C | kJ/m² | | 5.0 | 4.7 | 4.3 |
| Charpy ISO 179/1eA 23 °C | kJ/m² | | 6.8 | 11.0 | 6.4 |
| Charpy ISO 179/1eU 23 °C | kJ/m² | | 25.0 | > 87.6 | |
| Tensile Modulus | MPa | 9120 | 7460 | 2520 | 3920 |
| Bending Modulus | MPa | 8550 | 7770 | 2970 | 4290 |
| HDT 1.82 MPa | °C | 53 | 144 | 65 | 77 |

The experimental data reported above evidence that the indicated compositions, expecially formulation B, satisfy the minimum requirements for car interiors use that are:
- Charpy ISO 179/1eA 23°C of ≥ 4 kJ/m²
- HDT 1.82 MPa of ≥ 130 °C
- Tensile Modulus of ≥ 4000 MPa

## Claims

1. A polylactic acid-based composition comprising:
i) 70 to 95 wt.-% of a polylactic acid compound,
ii) 4 to 25 wt.-% of an aromatic-based copolyester having soft segments being long-chain ester units, and
iii) 0.1 to 5.0 wt.-% of a polybutylene terephthalate cyclic oligomer.

2. The polylactic acid-based composition according to claim 1, further comprising iv) glass or natural derived fibre reinforcing materials.

3. The polylactic acid-based composition according to claim 1 or 2, wherein the aromatic-based copolyester is derived from a mixture of dimerised fatty acids and is at least 30 % based on renewable resources.

4. The polylactic acid-based composition according to any of claims 1 to 3, wherein
- the amount of the polylactic acid compound is 79 to 90 wt.-%,
- the aromatic-based copolyester is selected from copolyether ester (TPC-ET), copolyester ester (TPC-ES), copolyester ether (TPC-EE), in an amount from 7 to 18 wt.-% , and
- the amount of the polybutylene terephthalate cyclic oligomer composition is 2 to 3 wt.-%.

5. A process for preparing a polylactic acid-based composition according to any of claims 1 to 4, comprising the process steps:
A) providing a mixture of
i) 70 to 95 wt.-% of a polylactic acid compound,
ii) 4 to 25 wt.-% of an aromatic-based copolyester having soft segments being long-chain ester units, and
iii) 0.1 to 5.0 wt.-% of a polybutylene terephthalate cyclic oligomer, and
B) melt kneading the mixture at a temperature profile comprising the temperature steps of 200 °C, 210 °C, 230 °C, 230 °C, 210 °C, 200 °C, wherein each temperature step is maintained for 15 to 60 seconds.

6. The process according to claim 5, wherein the mixture further comprises
iv) glass or natural derived fibre reinforcing materials.

7. The process according to claim 5 or 6, further comprising the process step:
C) pelletising the melt kneaded mixture.

8. A method for processing a polylactic acid-based composition into a moulded article, comprising the method steps of:
a) providing a polylactic acid-based composition according to any of claims 1 to 4 in a molten state,
b) introducing the molten polylactic acid-based composition into a pre-heated moulding tool at a temperature of 90 to 120 °C,
c) moulding the polylactic acid-based composition at an elevated temperature of 180 to 210 °C into a moulded article,
d) cooling the moulded article within the moulding tool at a reduced temperature of 60 to 90 °C, and
e) demoulding the moulded article.

9. The method according to claim 8, wherein in method step a) and/or b) carbon dioxide is admixed to the molten polylactic acid-based composition, in particular carbon dioxide in its supercritical state.

10. A moulded article obtainable by the method according to any of claims 8 or 9 applying the polylactic acid-based composition according to any of claims 1 to 4.

11. A use of a polylactic acid-based composition according to any of claims 1 to 4 for manufacturing components having a shock resistance greater than 20 kJ/m², preferably greater than 80 kJ/m², determined as per standard test according to ISO 179/1eU Charpy unnotched 23°C in particular intake ducts, rocker covers, bumpers, cowl-grilles, covers, deflectors, shields, wheel arch liners, interior trims.

12. A use of a polylactic acid-based composition according to any of claims 1 to 4 for manufacturing components having scratch resistance and UV resistance, in particular interior and exterior trims such as door panels component, dashboard, cowl-grilles, rocker cover, and external mirrors.

13. A use of a polylactic acid-based composition according to any of claims 1 to 4 for manufacturing components having high dimensional stability at heat deflection temperatures of more than 140 °C at 1.82 MPa, determined as per standard ISO 75-1/-2, value > 140 °C. in particular intake system ducts, air filter boxes, intake resonators, snorkels, battery trays, engine design covers, active grille shutters.

14. A use of a polylactic acid-based composition according to any of claims 1 to 4 for manufacturing components having a hot air resistance at 150 °C for more than 500 hours, determined as per standard ISO 527-1/-1, value of tensile stress break > 50 % than value before ageing in particular air filter boxes, charged air intake ducts, engine covers, air intake manifolds, undershields cover in exhaust pipe area, exhaust mufflers.

15. A use of a polylactic acid-based composition according to any of claims 1 to 4 for manufacturing components having hydrolysis resistance at 95 °C in 90 - 100 % relative humidity environments for at least 500 hours, determined as per standard ISO 527-1/-1, value of tensile stress break > 50 % than value before ageing in particular underbody shields, deflectors, wheel arch liners and general underbody components.

## Patentansprüche

1. Zusammensetzung auf Polymilchsäurebasis, enthaltend:
i) 70 bis 95 Gew.-% einer Polymilchsäureverbindung,
ii) 4 bis 25 Gew.-% eines aromatischen Copolyesters mit Weichsegmenten aus langkettigen Estereinheiten, und
iii) 0,1 bis 5,0 Gew.-% eines zyklischen Polybutylenterephthalatoligomers.

2. Zusammensetzung auf Polymilchsäurebasis, weiter enthaltend
iv) Verstärkungsmaterialien aus Glas oder Naturfasern

3. Zusammensetzung auf Polymilchsäurebasis gemäß Anspruch 1 oder 2, wobei der aromatische Copolyester aus einer Mischung aus dimerisierten Fettsäuren entstammt und zu mindestens 30 % auf nachwachsenden Rohstoffen basiert.

4. Zusammensetzung auf Polymilchsäurebasis gemäß den Ansprüchen 1 bis 3, wobei
- der Anteil der Polymilchsäureverbindung 79 bis 90 Gew.-% beträgt,
- der aromatische Copolyester ausgewählt ist aus
Copolyetherester (TPC-ET),
Copolyesterester (TPC-ES),
Copolyesterether (TPC-EE),
in einem Anteil von 7 bis 18 Gew.-%, und
- der Anteil der zyklischen Polybutylenterephthalat-Oligomerzusammensetzung 2 bis 3 Gew.-% beträgt.

5. Verfahren zur Herstellung einer Zusammensetzung auf Polymilchsäurebasis gemäß den Ansprüchen 1 bis 4, umfassend die Verfahrensschritte:
A) Bereitstellen einer Mischung aus
i) 70 bis 95 Gew.-% einer Polymilchsäureverbindung,
ii) 4 bis 25 Gew.-% eines aromatischen Copolyesters mit Weichsegmenten aus langkettigen Estereinheiten, und
iii) 0,1 bis 5,0 Gew.-% eines zyklischen Polybutylenterephthalatoligomers, und
B) Schmelzkneten der Mischung bei einem Temperaturverlauf, der die Temperaturschritte von 200 °C, 210 °C, 230 °C, 230 °C, 210 °C, 200 °C umfasst, wobei jeder Temperaturschritt für 15 bis 60 Sekunden gehalten wird.

6. Verfahren gemäß Anspruch 5, wobei die Mischung ferner
iv) Verstärkungsmaterialien aus Glas oder Naturfasern enthält.

7. Verfahren gemäß Anspruch 5 oder 6, ferner umfassend den Verfahrensschritt
C) Pelletieren der Schmelzknetmischung.

8. Verfahren zur Verarbeitung einer Zusammensetzung auf Polymilchsäurebasis zu einem Formkörper, umfassend die Verfahrensschritte:
a) Bereitstellen einer Zusammensetzung auf Polymilchsäurebasis gemäß den Ansprüchen 1 bis 4, in geschmolzenem Zustand,
b) Einbringen der geschmolzenen Zusammensetzung auf Polymilchsäurebasis in ein vorgeheiztes Formwerkzeug bei einer Temperatur von 90 bis 120 °C,
c) Formen der Zusammensetzung auf Polymilchsäurebasis zu einem Formkörper bei einer auf 180 bis 210 °C erhöhten Temperatur,
d) Abkühlen des Formkörpers innerhalb des Formwerkzeugs bei einer auf 60 bis 90 °C verringerten Temperatur, und
e) Entformen des Formkörpers.

9. Verfahren gemäß Anspruch 8, wobei in Verfahrensschritt a) und/oder b) der geschmolzenen Zusammensetzung auf Polymilchsäurebasis Kohlenstoffdioxid beigemischt wird, besonders überkritisches Kohlenstoffdioxid.

10. Formkörper erhältlich nach dem Verfahren gemäß Anspruch 8 oder 9, wobei die Zusammensetzung auf Polymilchsäurebasis gemäß den Ansprüchen 1 bis 4 verwendet wird.

11. Verwendung einer Zusammensetzung auf Polymilchsäurebasis gemäß den Ansprüchen 1 bis 4 zur Herstellung von Bauteilen mit einer Schlagfestigkeit von mehr als 20 kJ/m², bevorzugt von mehr als 80 kJ/m², insbesondere Ansaugkanäle, Kipphebelabdeckungen, Stoßfänger, Kühlergrills, Abdeckungen, Abweiser, Schilde, Radlaufverkleidungen, Innenverkleidungen.

12. Verwendung einer Zusammensetzung auf Polymilchsäurebasis gemäß den Ansprüchen 1 bis 4 zur Herstellung von Bauteilen mit Kratz- und UV-Beständigkeit, insbesondere Innen- und Außenverkleidungen wie Türverkleidungsbestandteile, Armaturenbrett, Kühlergrills, Kipphebelabdeckung und Außenspiegel.

13. Verwendung einer Zusammensetzung auf Polymilchsäurebasis gemäß den Ansprüchen 1 bis 4 zur Herstellung von Bauteilen, die bei Wärmeverformungstemperaturen von mehr als 140 °C bei 1,82 MPa eine hohe Formstabilität aufweisen, insbesondere Ansaugsystemkanäle, Luftfilterkästen, Ansaugresonatoren, Schnorchel, Batterieträger, Motordesignabdeckungen, aktiv steuerbare Luftklappensysteme.

14. Verwendung einer Zusammensetzung auf Polymilchsäurebasis gemäß den Ansprüchen 1 bis 4 zur Herstellung von Bauteilen, die bei 150 °C über mehr als 500 Stunden heißluftbeständig sind, insbesondere Luftfilterkästen, Ladelufteinlasskanäle, Motorabdeckungen, Ansaugkrümmer, Unterbodenschutz im Auspuffbereich, Schalldämpfer.

15. Verwendung einer Zusammensetzung auf Polymilchsäurebasis gemäß den Ansprüchen 1 bis 4 zur Herstellung von Bauteilen, die bei 95 °C in Umgebungen von 100 % relativer Luftfeuchtigkeit über mindestens 500 Stunden hydrolysebeständig sind, insbesondere Unterbodenschilde, Deflektoren, Radlaufverkleidungen und allgemeine Unterbodenteile.

## Revendications

1. Composition à base d'acide polylactique comprenant:
i) de 70 à 95 % en poids d'un composé d'acide polylactique,
ii) de 4 à 25 % en poids d'un copolyester aromatique dont les segments souples sont des unités d'esters à longue chaîne, et
iii) de 0,1 à 5,0 % en poids d'un oligomère cyclique de téréphtalate de polybutylène.

2. La composition à base d'acide polylactique selon la revendication 1, comprenant en outre
iv) des matériaux de renforcement en verre ou en fibres naturelles.

3. Composition à base d'acide polylactique selon la revendication 1 ou 2, dans laquelle le copolyester à base aromatique est dérivé d'un mélange d'acides gras dimérisés et est basé d'au moins à 30 % sur les ressources renouvelables.

4. Composition à base d'acide polylactique selon l'une quelconque des revendications 1 à 3, dans laquelle
- la quantité du composé d'acide polylactique est de 79 à 90 % en poids,
- le copolyester aromatique est sélectionné parmi
copolyéther ester (TPC-ET),
copolyester ester (TPC-ES),
copolyester ether (TPC-EE),
en une quantité de 7 à 18 % en poids, et
- la quantité de la composition oligomère cyclique de téréphtalate de polybutylène est de 2 à 3 % en poids.

5. Procédé de préparation d'une composition à base d'acide polylactique selon l'une quelconque des revendications 1 à 4, comprenant les étapes de procédé:
A) fourniture d'un mélange de
i) 70 à 95 % en poids d'un composé d'acide polylactique,
ii) 4 à 25 % en poids d'un copolyester aromatique dont les segments souples sont des des unités d'esters à longue chaîne, et
iii) 0,1 à 5,0 % en poids d'un oligomère cyclique téréphtalate de polybutylène, et
B) malaxage du mélange en fusion à un profil de température comprenant les étapes de température de 200 °C, 210 °C, 230 °C, 230 °C, 210 °C, 200 °C, où chaque étape de température est maintenue pendant 15 à 60 secondes.

6. Procédé selon la revendication 5, dans lequel le mélange contient en outre
iv) des matériaux de renforcement en verre ou en fibres naturelles.

7. Procédé selon la revendication 5 ou 6, comprenant en outre l'étape de procédé:
C) granulation du mélange malaxé en fusion.

8. Procédé pour transformer une composition à base d'acide polylactique en un objet moulé, comprenant les étapes de procédé:
a) fournissage d'une composition à base d'acide polylactique selon l'une quelconque des revendications 1 à 4, à l'état fondu,
b) introduction de la composition en fusion à base d'acide polylactique dans un outil de moulage préchauffé à une température de 90 à 120 °C,
c) moulage de la composition à base d'acide polylactique en un objet moulé à une température élevée de 180 à 210 °C,
d) refroidissement de l'objet moulé dans l'outil de moulage à une température réduite de 60 à 90 °C, et
e) démoulage de l'objet moulé.

9. Procédé selon la revendication 8, dans lequel à l'étape de procédé a) et/ou b) du dioxyde de carbone est mélangé à la composition polylactique en fusion à base d'acide, en particulier du dioxyde de carbone supercritique.

10. Objet moulé pouvant être obtenu par le procédé selon l'une quelconque des revendications 8 ou 9 en appliquant la composition à base d'acide polylactique selon l'une quelconque des revendications 1 à 4.

11. Utilisation d'une composition à base d'acide polylactique selon l'une quelconque des revendications 1 à 4 pour fabriquer des composants ayant une résistance aux chocs supérieure à 20 kJ/m², de préférence supérieure à 80 kJ/m², en particulier des conduits d'admission, des cache-culbuteurs, des pare-chocs, des grilles de radiateurs, des carénages, des déflecteurs, des boucliers, des garde-boue de roues, des garnitures intérieures.

12. Utilisation d'une composition à base d'acide polylactique selon l'une quelconque des revendications 1 à 4 pour fabriquer des composants ayant une résistance aux rayures et aux UV, en particulier des garnitures intérieures et extérieures telles que des éléments des panneaux de portes, un tableau de bord, des grilles de radiateurs, un cache-culbuteurs et des rétroviseurs extérieurs.

13. Utilisation d'une composition à base d'acide polylactique selon l'une quelconque des revendications 1 à 4 pour fabriquer des composants ayant une stabilité dimensionnelle élevée à des températures de fléchissement à la chaleur de plus de 140 °C à 1,82 MPa, en particulier des conduits du système d'admission, des caissons de filtration d'air, des résonateurs d'admission, des tubas, des plateaux pour batteries, des couvercles de moteur, des volets de grille actifs.

14. Utilisation d'une composition à base d'acide polylactique selon l'une quelconque des revendications 1 à 4 pour fabriquer des composants ayant une résistance à l'air chaud à 150 °C pendant plus de 500 heures, en particulier des caissons de filtration d'air, des conduits d'admission d'air de suralimentation, des couvercles de moteur, des collecteurs d'admission d'air, la protection du bas de caisse dans la zone de l'échappement, des silencieux d'échappement.

15. Utilisation d'une composition à base d'acide polylactique selon l'une quelconque des revendications 1 à 4 pour fabriquer des composants ayant une résistance à l'hydrolyse à 95 °C dans des environnements d'humidité relative de 90 à 100 % pendant au moins 500 heures, en particulier des protecteurs de soubassement de carrosserie, des déflecteurs, des garde-boue de roues et des éléments généraux du soubassement de carrosserie.
